# EUROPÄISCHE PATENTSCHRIFT

(11) **EP 2 616 236 B1**
(45) Veröffentlichungstag und Bekanntmachung des Hinweises auf die Patenterteilung: **11.11.2015**
(21) Anmeldenummer: 11740920.1
(22) Anmeldetag: 04.08.2011
(51) Int. Cl.: B29D 30/02

(54) **VORRICHTUNG UND VERFAHREN ZUR HERSTELLUNG EINER BODENSCHICHT EINES VOLLREIFENS**
APPARATUS AND METHOD FOR PRODUCING A BASE LAYER OF A SOLID TYRE
DISPOSITIF ET PROCÉDÉ POUR PRODUIRE UNE COUCHE DE BASE D'UN BANDAGE PLEIN

(30) Priorität: 16.09.2010 DE 102010037571
(43) Veröffentlichungstag der Anmeldung: 24.07.2013
(73) Patentinhaber: Continental Reifen Deutschland GmbH, 30165 Hannover (DE)
(72) Erfinder: STEUBER, Siegbert, 34497 Korbach (DE); KRAUS, Alexander, 34519 Diemelsee (DE); POQUÉ, Hartwig, 34497 Korbach (DE); DISSELHOFF, Stephan, 34497 Korbach (DE); JACOB, Ralf, 34497 Korbach (DE)
(74) Vertreter: Finger, Karsten
(86) Internationale Anmeldenummer: PCT/EP2011/063432
(87) Internationale Veröffentlichungsnummer: WO 2012/034783

(56) Entgegenhaltungen:
- EP-A2- 0 480 318
- DE-C1- 4 119 141
- JP-A- 2000 351 164
- US-A- 4 197 155

## Beschreibung

Die Erfindung betrifft eine Vorrichtung und Verfahren zur Herstellung einer Bodenschicht eines Vollreifens.

Der Aufbau eines Vollreifens ist dem Fachmann hinlänglich bekannt. Vollreifen bestehen im Wesentlichen aus Gummi oder gummiähnlichem Kunststoff und weisen ein Laufband, eine Bodenschicht und eine zwischen Bodenschicht und Laufband optional angeordnete Dämpferschicht auf. Die Bodenschicht des Vollreifens weist einen dreiteiligen Aufbau auf: radial innen ist die sogenannte "Gummi-unter-Kern-Lage" angeordnet, auf dieser folgt die Kernlage, welche wiederum radial außen durch die Deckschicht abgedeckt wird.

Bisher wird die Bodenschicht derart hergestellt, dass zunächst die Gummi-unter-KemLage extrudiert und abgelängt und händisch zu einem Bodenring geschlossen wird. Die Kerne für die Kernlage werden durch Spulen von Einzeldrähten zu einem gesonderten Verband gefertigt, wobei mehrere dieser Verbände durch händische Verbindung der Gummi-unter-Kern-Lage und der Kernverbände zu einem Boden-Kern-Verband zusammengefügt werden. Dieser Boden-Kern-Verband wird auf einer Wickeltrommel angeordnet, auf den anschließend die radial äußere Schicht der Bodenschicht, die kalandrierte Deckschicht, gewickelt wird.

Zur Automatisierung der Bodenschichtherstellung ist es aus der DE 43 13 916 A1 bekannt, die Kernlage durch Wickeln eines gummierten Einzelfadens oder -seils oder -drahtes in zahlreichen Windungen zu erzeugen.

Durch die Spulung der Kernlage ist eine effizientere Herstellung der Bodenschicht des Vollreifens ermöglicht. Es besteht jedoch weiterhin Bedarf, die Herstellung des Vollreifens noch effizienter zu gestalten.

Zur Automatisierung der Bodenschichtherstellung ist es weiter aus der DE 41 19 141 C1 bekannt, dass mehrere Streifen unterschiedlicher Kautschukmischungen in mehreren Schichten auf einen Wickeldorn gewickelt werden, wobei mehrere Wickelvorrichtungen auf einer Transportvorrichtung angeordnet sind, welche in mehreren Haltepositionen feststellbar sind, wobei die Wickelvorrichtung zu den Extrudern transportiert wird und dort während des Wickelvorganges stehen bleibt.

Es ist die Aufgabe der Erfindung, eine Vorrichtung und ein Verfahren zur Verfügung zu stellen, mit denen die Herstellung eines Vollreifens effizienter gestaltet werden kann.

Diese Aufgabe wird in Bezug auf die Vorrichtung erfindungsgemäß dadurch gelöst, dass die Vorrichtung einen Schwenkblock mit zwei Wickeltrommeln, eine Wickelanlage zur Zuführung und Ablage der Gummi-unter-Kern-Lage und der Deckschicht auf der Wickeltrommel, eine Verlegeeinheit mit einem Drahtaufleger zur Zuführung und Ablage der Kernlage auf der Wickeltrommel aufweist, wobei der Schwenkblock mit den beiden Wickeltrommeln derart zwischen der Wickelanlage und der Verlegeeinheit angeordnet ist, dass in einer ersten Position die erste Wickeltrommel der Wickelanlage und die zweite Wickeltrommel dem Drahtaufleger zugeordnet ist und wobei der Schwenkblock derart um eine Achse schwenkbar ist, dass in einer zweiten Position die erste Wickeltrommel dem Drahtaufleger und die zweite Wickeltrommel der Wickelanlage zugeordnet ist.

Erfindungswesentlich ist, dass mit der erfindungsgemäßen Vorrichtung zwei Bodenschichten parallel zueinander - um einen Bauschritt verschoben - auf getrennten Wickeltrommeln abwechselnd an derselben Wickelanlage und Verlegeeinheit automatisiert gefertigt werden können. Die Gummi-unter-Kern-Lage und die Deckschicht sind kalandrierte Lagen, welche durch die Wickelanlage automatisiert zuführ- und auf und um die Wickeltrommel ablegbar sind, während durch die Verlegeeinheit die Kernlage spulbar ist. Durch Schwenkung des Schwenkblocks in die Positionen 1 und 2 ist jede der beiden Wickeltrommeln sowohl derselben Wickelanlage als auch demselben Drahtaufleger abwechselnd zuzuordnen. Es ist eine effizientere Herstellung der Bodenschicht mit erheblich geringeren Fertigungstoleranzen ermöglicht.

In einer bevorzugten Weiterbildung der Vorrichtung ist der Drahtaufleger in axialer Richtung und/oder radialer Richtung in Bezug auf die Wickeltrommel verfahrbar. Hierdurch ist erreicht, dass jedes erdenkliche Spulbild als Kernlage spulbar ist, wodurch optimale Eigenschaften der Kernlage erhaltbar sind.

In einer weiteren bevorzugten Weiterbildung der Erfindung ist vorgesehen, dass die Verlegeeinheit derart ausgelegt ist, dass ein Bund an gummierten Festigkeitsträgern verlegbar ist. Hierdurch ist im Herstellungsprozess ein Zeitvorteil erzielt. Der Vollreifen, dessen Kernlage Bunde an gummierten Festigkeitsträgern aufweist, zeichnet sich durch eine gleichmäßigere Kraftverteilung aus.

In einer weiteren bevorzugten Weiterbildung der Erfindung ist vorgesehen, dass ein Bund aus drei, vier, fünf oder sechs vorgummierten Festigkeitsträgern, vorzugsweise Stahlfestigkeitsträgern besteht.

Die Aufgabe wird in Bezug auf das Verfahren erfindungsgemäß dadurch gelöst, dass folgende Schritte nacheinander ausgeführt werden:
- Schwenkung des Schwenkblocks um seine Achse in die erste Position, so dass die erste Wickeltrommel der Wickelanlage und die zweite Wickeltrommel dem Drahtaufleger zugeordnet ist,
- Aufbringung einer Gummi-unter-Kern-Lage auf die erste Wickeltrommel, indem die Lage aus der Wickelanlage zugeführt und auf die rotierende Wickeltrommel auf- und umgelegt wird,
- Schwenkung des Schwenkblocks um seine Achse in die zweite Position, so dass die erste Wickeltrommel dem Drahtaufleger und die zweite Wickeltrommel der Wickelanlage zugeordnet ist,
- Spulung der Kernlage aus einem Bund aus vorgummierten Festigkeitsträgern auf die Gummi-unter-Kern-Lage der ersten Wickeltrommel und vorzugsweise gleichzeitige Aufbringung einer Gummi-unter-Kern-Lage auf die zweite rotierende Wickeltrommel, indem die Lage aus der Wickelanlage zugeführt und auf die zweite rotierende Wickeltrommel auf- und umgelegt wird,
- Schwenkung des Schwenkblocks um seine Achse in die erste Position, so dass die erste Wickeltrommel der Wickelanlage und die zweite Wickeltrommel dem Drahtaufleger zugeordnet ist,
- Aufbringung der Deckschicht auf die erste Wickeltrommel, indem die Lage aus der Wickelanlage zugeführt und auf die erste rotierende Wickeltrommel auf- und umgelegt wird, Abnahme der Bodenschicht von der ersten Wickeltrommel und gleichzeitige Spulung von einem Bund aus vorgummierten Festigkeitsträgern auf die Gummi-unter-Kern-Lage der rotierenden zweiten Wickeltrommel,
- vorzugsweise Schwenkung des Schwenkblocks um seine Achse, so dass in der zweiten Position die erste Wickeltrommel dem Drahtaufleger und die zweite Wickeltrommel der Wickelanlage zugeordnet ist,
- Aufbringung der Deckschicht auf die Kernlage der zweiten Wickeltrommel, indem die Lage aus der Wickelanlage zugeführt und auf die Kernlage der zweiten rotierenden Wickeltrommel auf- und umgelegt wird und Abnahme der Bodenschicht von der zweiten Wickeltrommel.

Die erfindungsgemäß erzielten Vorteile sind die zur Vorrichtung beschriebenen Vorteile.

In einer bevorzugten Weiterbildung des Verfahrens ist vorgesehen, dass man den Drahtaufleger in axialer Richtung und/oder radialer Richtung in Bezug auf die Wickeltrommel verfährt. Hierdurch ist erreicht, dass jedes erdenkliche Spulbild als Kernlage spulbar ist, wodurch optimale Eigenschaften der Kernlage erhaltbar sind.

In einer weiteren bevorzugten Weiterbildung des Verfahrens ist vorgesehen, dass man ein Bund aus drei, vier, fünf oder sechs vorgummierten Festigkeitsträgern, vorzugsweise Stahlfestigkeitsträgern, verlegt.

Nachfolgend werden mehrere Figuren, die schematische Ausführungsbeispiele darstellen, näher beschrieben. Dabei zeigen die
Fig.1 einen Querschnitt durch einen Vollreifen mit Bodenschicht,
Fig.2 eine Aufsicht auf eine erfindungsgemäße Vorrichtung zur automatisierten Fertigung der Bodenschicht.

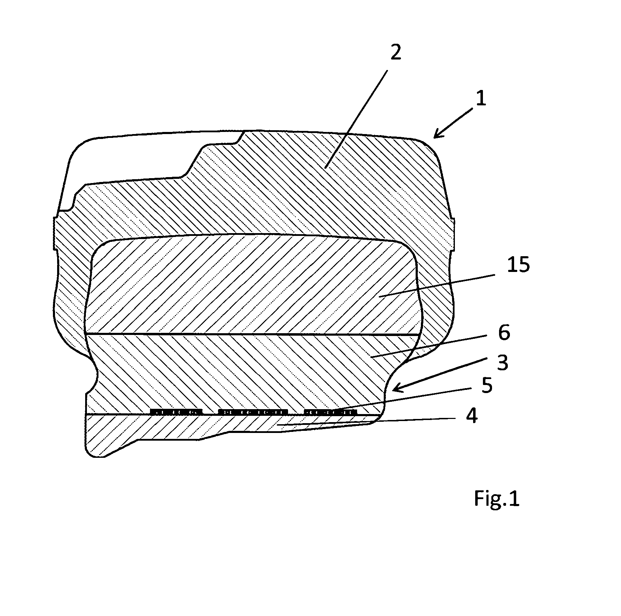

Der Vollreifen 1 der Figur 1 besteht im Wesentlichen aus einem Laufband 2, einer Bodenschicht 3 und einer zwischen Bodenschicht 3 und Laufband 2 angeordneten Dämpferschicht 15. Die Bodenschicht 3 wird aus einem sehr zähharten Gummi gebildet, während der Gummi des Laufbandes 2 elastischer eingestellt ist und darüber hinaus äußert verschleißfest gewählt ist. Die Bodenschicht 3 des Vollreifens 1 weist einen dreiteiligen Aufbau auf: radial innen ist die sogenannte "Gummi-unter-Kern-Lage" 4 angeordnet, es folgt die Kernlage 5, welche radial außen durch die Deckschicht 6 abgedeckt wird. Die flache Kernlage 5 ist gespult.

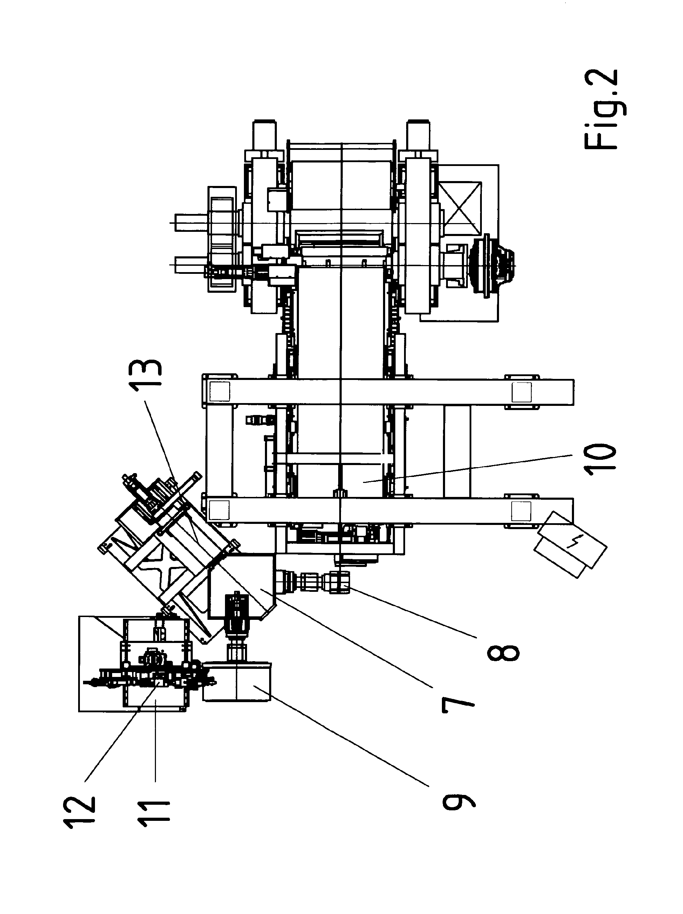

Die Fig.2 zeigt eine Aufsicht auf eine erfindungsgemäße Vorrichtung zur automatisierten Fertigung der Bodenschicht 3 eines Vollreifens 1 der Fig.1. Die Vorrichtung weist einen Schwenkblock 7 mit zwei rotierbaren Wickeltrommeln 8, 9, eine Wickelanlage zur Zuführung und Ablage der Gummi-unter-Kern-Lage 4 und der Deckschicht 6 auf der Wickeltrommel 8, 9, eine Verlegeeinheit 11 mit einem Drahtaufleger 12 zur Zuführung und Ablage der Kernlage 5 durch Spulen auf der Wickeltrommel 8, 9 auf. Der Schwenkblock 7 mit den beiden Wickeltrommeln 8, 9 ist derart zwischen der Wickelanlage 10 und dem Drahtaufleger 12 angeordnet, dass in einer ersten Position die erste Wickeltrommel 8 der Wickelanlage 10 und die zweite Wickeltrommel 9 dem Drahtaufleger 12 zugeordnet ist. Der Schwenkblock 7 ist derart um eine Achse 13 schwenkbar, dass in einer zweiten Position die erste Wickeltrommel 8 dem Drahtaufleger 12 und die zweite Wickeltrommel 9 der Wickelanlage 10 zugeordnet ist. Der Drahtaufleger 12 ist in radialer sowie in axialer Richtung in Bezug auf die Wickeltrommen 8, 9 verfahrbar und ist derart ausgelegt, dass dieser ein Bund 14, bestehend aus 3 bis 6 gummierten Festigkeitsträgern auflegen kann.

Zur Herstellung der Bodenschicht 3 mit dieser Vorrichtung wird folgendermaßen vorgegangen:
- Schwenkung des Schwenkblocks 7 um seine Achse 13 in die erste Position, so dass die erste Wickeltrommel 8 der Wickelanlage 10 und die zweite Wickeltrommel 9 dem Drahtaufleger 12 zugeordnet ist
- Aufbringung einer Gummi-unter-Kern-Lage 4 auf die erste Wickeltrommel 8, indem die Lage 4 aus der Wickelanlage 10 zugeführt und auf die rotierende erste Wickeltrommel 8 auf- und umgelegt wird,
- Schwenkung des Schwenkblocks 7 um seine Achse 13 in die zweite Position, so dass die erste Wickeltrommel 8 dem Drahtaufleger 12 und die zweite Wickeltrommel 9 der Wickelanlage 10 zugeordnet ist,
- Spulung der Kernlage 5 aus einem Bund 14 aus vorgummierten Festigkeitsträgern auf die Gummi-unter-Kern-Lage 4 der ersten Wickeltrommel 8 und gleichzeitige Aufbringung einer Gummi-unter-Kern-Lage 4 auf die zweite rotierende Wickeltrommel 9, indem die Lage 4 aus der Wickelanlage 10 zugeführt und auf die zweite rotierende Wickeltrommel 9 auf- und umgelegt wird,
- Schwenkung des Schwenkblocks 7 um seine Achse 13 in die erste Position, so dass die erste Wickeltrommel 8 der Wickelanlage 10 und die zweite Wickeltrommel 9 dem Drahtaufleger 12 zugeordnet ist,
- Aufbringung der Deckschicht 6 auf die erste Wickeltrommel 8, indem die Lage 6 aus der Wickelanlage 10 zugeführt und auf die erste rotierende Wickeltrommel 8 auf- und umgelegt wird, Abnahme der Bodenschicht 3 von der ersten Wickeltrommel 8 und gleichzeitige Spulung der Kernlage 5 von einem Bund 14 aus vorgummierten Festigkeitsträgern auf die Gummi-unter-Kern-Lage 4 der rotierenden zweiten Wickeltrommel 9,
- Schwenkung des Schwenkblocks 7 um seine Achse 13, so dass in der zweiten Position die erste Wickeltrommel 8 dem Drahtaufleger 12 und die zweite Wickeltrommel 9 der Wickelanlage 10 zugeordnet ist,
- Aufbringung der Deckschicht 6 auf die Kernlage 5 auf der zweiten Wickeltrommel 9, indem die Lage 6 aus der Wickelanlage 10 zugeführt und auf die Kernlage 5 der zweiten rotierenden Wickeltrommel 9 auf- und umgelegt wird und Abnahme der Bodenschicht 3 von der zweiten Wickeltrommel 9.

Die Boden-unter-Kern-Lage und die Decklage werden kalandriert, während die Kernlage gespult wird.

"Kalandrieren" bedeutet das Erzeugen einer dünnen Mischungsplatte aus Kautschuk unter Zuhilfenahme zweier gegenläufig rotierender Walzen. Diese Mischungsplatte wird durch Schneidmesser auf eine derartige Breite gebracht, die der Breite des Bauteiles im Reifenrohling entspricht.

"Spulen" bedeutet das Wickeln eines Einzelfadens oder -drahtes, eines Kordes oder eines Bundes an Festigkeitsträgern, z.B. aus Stahldraht, in zahlreichen axial benachbarten oder übereinanderliegenden Windungen über den Umfang der Wickeltrommel.

### Bezugszeichenliste

### (Teil der Beschreibung)

- 1: Vollreifen
- 2: Laufband
- 3: Bodenschicht
- 4: Gummi-unter-Kern-Lage
- 5: Kernlage
- 6: Deckschicht
- 7: Schwenkblock
- 8: Erste Wickeltrommel
- 9: Zweite Wickeltrommel
- 10: Wickelanlage
- 11: Verlegeeinheit
- 12: Drahtaufleger
- 13: Achse Schwenkblock
- 14: Bund an gummierten Festigkeitsträgern
- 15: Dämpferschicht

## Patentansprüche

1. Vorrichtung zur Herstellung einer Bodenschicht von Vollreifenrohlingen, bestehend aus einer radial inneren Gummi-unter-Kern-Lage (4), einer mittleren Kernlage (5) und einer radial äußeren Deckschicht (6), wobei die Vorrichtung einen Schwenkblock (7) mit zwei Wickeltrommeln (8, 9) und eine Verlegeeinheit (11) mit einem Drahtaufleger (12) zur Zuführung und Ablage der Kernlage (5) auf der Wickeltrommel (8, 9) aufweist,
**dadurch gekennzeichnet, dass**
die Vorrichtung eine Wickelanlage (10) zur Zuführung und Ablage der Gummi-unter-Kern-Lage (4) und der Deckschicht (6) auf der Wickeltrommel (8, 9) aufweist, dass der Schwenkblock (7) mit den beiden Wickeltrommeln (8, 9) derart zwischen der Wickelanlage (10) und der Verlegeeinheit (11) angeordnet ist, dass in einer ersten Position die erste Wickeltrommel (8) der Wickelanlage (10) und die zweite Wickeltrommel (9) der Verlegeeinheit (11) zugeordnet ist und dass der Schwenkblock (7) derart um eine Achse (13) schwenkbar ist, dass in einer zweiten Position die erste Wickeltrommel (8) dem Drahtaufleger (12) und die zweite Wickeltrommel (9) der Wickelanlage (10) zugeordnet ist.

2. Vorrichtung nach Anspruch 1, **dadurch gekennzeichnet, dass** der Drahtaufleger (12) in axialer Richtung und/oder radialer Richtung in Bezug auf die Wickeltrommel (8, 9) verfahrbar ist.

3. Vorrichtung nach Anspruch 1 oder Anspruch 2, **dadurch gekennzeichnet, dass** die Verlegeeinheit (11) derart ausgelegt ist, dass Bunde (14) an gummierten Festigkeitsträgern verlegbar sind.

4. Vorrichtung nach Anspruch 3, **dadurch gekennzeichnet, dass** ein Bund (14) aus drei, vier, fünf oder sechs vorgummierten Festigkeitsträgern, vorzugsweise Stahlfestigkeitsträgern besteht.

5. Verfahren zur Herstellung einer Bodenschicht von Vollreifen (1), bestehend aus einer Gummi-unter-Kern-Lage (4), einer Kernlage (5) und einer Deckschicht (6), mit einer Vorrichtung gemäß einem oder mehreren der Ansprüche 1 - 4, **dadurch gekennzeichnet, dass**
folgende Schritte ausgeführt werden:
- Schwenkung des Schwenkblocks (7) um seine Achse (13) in die erste Position, so dass die erste Wickeltrommel (8) der Wickelanlage (10) und die zweite Wickeltrommel (9) dem Drahtaufleger (12) zugeordnet ist
- Aufbringung einer Gummi-unter-Kern-Lage (4) auf die erste Wickeltrommel (8), indem die Lage (4) aus der Wickelanlage (10) zugeführt und auf die rotierende Wickeltrommel (8) auf- und umgelegt wird,
- Schwenkung des Schwenkblocks (7) um seine Achse (13) in die zweite Position, so dass die erste Wickeltrommel (8) dem Drahtaufleger (12) und die zweite Wickeltrommel (9) der Wickelanlage (10) zugeordnet ist,
- Spulung der Kernlage (5) aus einem Bund (14) aus vorgummierten Festigkeitsträgern auf die Gummi-unter-Kern-Lage (4) der ersten Wickeltrommel (8) und vorzugsweise gleichzeitige Aufbringung einer Gummi-unter-Kern-Lage (4) auf die zweite rotierende Wickeltrommel (9), indem die Lage (4) aus der Wickelanlage (10) zugeführt und auf die zweite rotierende Wickeltrommel (9) auf- und umgelegt wird,
- Schwenkung des Schwenkblocks (7) um seine Achse (13) in die erste Position, so dass die erste Wickeltrommel (8) der Wickelanlage (10) und die zweite Wickeltrommel (9) dem Drahtaufleger (12) zugeordnet ist,
- Aufbringung der Deckschicht (6) auf die erste Wickeltrommel (8), indem die Lage (6) aus der Wickelanlage (10) zugeführt und auf die erste rotierende Wickeltrommel (8) auf- und umgelegt wird, Abnahme der Bodenschicht (3) von der ersten Wickeltrommel (8) und gleichzeitige Spulung von einem Bund (14) aus vorgummierten Festigkeitsträgern auf die Gummi-unter-Kern-Lage (4) der rotierenden zweiten Wickeltrommel (9),
- vorzugsweise Schwenkung des Schwenkblocks (7) um seine Achse (13), so dass in der zweiten Position die erste Wickeltrommel (8) dem Drahtaufleger (12) und die zweite Wickeltrommel (9) der Wickelanlage (10) zugeordnet ist,
- Aufbringung der Deckschicht (6) auf die Kernlage (5) der zweiten Wickeltrommel (9), indem die Lage (6) aus der Wickelanlage (10) zugeführt und auf die Kernlage (5) der zweiten rotierenden Wickeltrommel (9) auf- und umgelegt wird und Abnahme der Bodenschicht (3) von der zweiten Wickeltrommel (9).

6. Verfahren nach Anspruch 5, **dadurch gekennzeichnet, dass** man den Drahtaufleger (12) in axialer Richtung und/oder radialer Richtung in Bezug auf die Wickeltrommel (8, 9) verfährt.

7. Verfahren nach Anspruch 5 oder 6, **dadurch gekennzeichnet, dass** man ein Bund (14) aus drei, vier, fünf oder sechs vorgummierten Festigkeitsträgern, vorzugsweise Stahlfestigkeitsträgern, verlegt.

## Claims

1. Apparatus for producing a base layer of solid tire blanks consisting of a radially inner rubber-under-core ply (4), a middle core ply (5) and a radially outer covering layer (6), the apparatus having a pivoting block (7) with two winding drums (8, 9) and a laying unit (11) with a wire support (12) for feeding and depositing the core ply (5) on the winding drum (8, 9), **characterized in that** the apparatus has a winding system (10) for feeding and depositing the rubber-under-core ply (4) and the covering layer (6) on the winding drum (8, 9), **in that** the pivoting block (7) with the two winding drums (8, 9) is arranged between the winding system (10) and the laying unit (11) in such a way that, in a first position, the first winding drum (8) is assigned to the winding system (10) and the second winding drum (9) is assigned to the laying unit (11), and **in that** the pivoting block (7) is pivotable about an axis (13) in such a way that, in a second position, the first winding drum (8) is assigned to the wire support (12) and the second winding drum (9) is assigned to the winding system (10).

2. Apparatus according to Claim 1, **characterized in that** the wire support (12) is movable in the axial direction and/or radial direction with respect to the winding drum (8, 9).

3. Apparatus according to Claim 1 or Claim 2, **characterized in that** the laying unit (11) is designed in such a way that bundles (14) of rubberized reinforcing elements can be laid.

4. Apparatus according to Claim 3, **characterized in that** a bundle (14) consists of three, four, five or six pre-rubberized reinforcing elements, preferably steel reinforcing elements.

5. Method for producing a base layer of solid tires (1), consisting of a rubber-under-core ply (4), a core ply (5) and a covering layer (6), with an apparatus according to one or more of Claims 1-4, **characterized in that** the following steps are performed:
- pivoting the pivoting block (7) about its axis (13) into the first position, so that the first winding drum (8) is assigned to the winding system (10) and the second winding drum (9) is assigned to the wire support (12),
- applying a rubber-under-core ply (4) to the first winding drum (8), by the ply (4) being fed from the winding system (10) and placed onto and around the rotating winding drum (8),
- pivoting the pivoting block (7) about its axis (13) into the second position, so that the first winding drum (8) is assigned to the wire support (12) and the second winding drum (9) is assigned to the winding system (10),
- coiling the core ply (5) from a bundle (14) of pre-rubberized reinforcing elements onto the rubber-under-core ply (4) of the first winding drum (8) and preferably at the same time applying a rubber-under-core ply (4) to the second rotating winding drum (9), by the ply (4) being fed from the winding system (10) and placed onto and around the second rotating winding drum (9),
- pivoting the pivoting block (7) about its axis (13) into the first position, so that the first winding drum (8) is assigned to the winding system (10) and the second winding drum (9) is assigned to the wire support (12),
- applying the covering layer (6) to the first winding drum (8), by the ply (6) being fed from the winding system (10) and placed onto and around the first rotating winding drum (8), removing the base layer (3) from the first winding drum (8) and at the same time coiling from a bundle (14) of pre-rubberized reinforcing elements onto the rubber-under-core ply (4) of the rotating second winding drum (9),
- preferably pivoting the pivoting block (7) about its axis (13), so that, in the second position, the first winding drum (8) is assigned to the wire support (12) and the second winding drum (9) is assigned to the winding system (10),
- applying the covering layer (6) to the core ply (5) of the second winding drum (9), by the ply (6) being fed from the winding system (10) and placed onto and around the core ply (5) of the second rotating winding drum (9) and removing the base layer (3) from the second winding drum (9).

6. Method according to Claim 5, **characterized in that** the wire support (12) is moved in the axial direction and/or radial direction with respect to the winding drum (8, 9).

7. Method according to Claim 5 or 6, **characterized in that** a bundle (14) of three, four, five or six pre-rubberized reinforcing elements, preferably steel reinforcing elements, is laid.

## Revendications

1. Dispositif pour produire une couche de base d'ébauches de bandages pleins, se composant d'une couche de gomme sous noyau radialement interne (4), d'une couche de noyau moyenne (5) et d'une couche de recouvrement radialement externe (6), dans lequel le dispositif présente un bloc pivotant (7) avec deux tambours d'enroulement (8, 9) et une unité de pose (11) avec une poseuse de fil (12) pour la fourniture et le dépôt d'une couche de noyau (5) sur le tambour d'enroulement (8, 9), **caractérisé en ce que** le dispositif présente une installation d'enroulement (10) pour la fourniture et le dépôt de la couche de gomme sous noyau (4) et de la couche de recouvrement (6) sur le tambour d'enroulement (8, 9), **en ce que** le bloc pivotant (7) avec les deux tambours d'enroulement (8, 9) est disposé entre l'installation d'enroulement (10) et l'unité de pose (11), de telle manière que dans une première position le premier tambour d'enroulement (8) soit associé à l'installation d'enroulement (10) et que le deuxième tambour d'enroulement (9) soit associé à l'unité de pose (11), et **en ce que** le bloc pivotant (7) peut pivoter autour d'un axe (13) de telle manière que dans une deuxième position le premier tambour d'enroulement (8) soit associé à la poseuse de fil (12) et que le deuxième tambour d'enroulement (9) soit associé à l'installation d'enroulement (10).

2. Dispositif selon la revendication 1, **caractérisé en ce que** la poseuse de fil (12) est déplaçable en direction axiale et/ou en direction radiale par rapport aux tambours d'enroulement (8, 9).

3. Dispositif selon la revendication 1 ou la revendication 2, **caractérisé en ce que** l'unité de pose (11) est conçue de telle manière que des faisceaux (14) d'éléments de résistance caoutchoutés puissent être posés.

4. Dispositif selon la revendication 3, **caractérisé en ce qu'**un faisceau (14) se compose de trois, quatre, cinq ou six éléments de résistance pré-caoutchoutés, de préférence des éléments de résistance en acier.

5. Procédé pour produire une couche de base d'un bandage plein (1), se composant d'une couche de caoutchouc sous noyau (4), d'une couche de noyau (5) et d'une couche de recouvrement (6), avec un dispositif selon une ou plusieurs des revendications 1 à 4, **caractérisé en ce que** l'on exécute les étapes suivantes:
- pivotement du bloc pivotant (7) autour de son axe (13) dans la première position, de telle manière que le premier tambour d'enroulement (8) soit associé à l'installation d'enroulement (10) et que le deuxième tambour d'enroulement (9) soit associé à la poseuse de fil (12),
- dépôt d'une couche de caoutchouc sous noyau (4) sur le premier tambour d'enroulement (8), du fait que la couche (4) est fournie à partir de l'installation d'enroulement (10) et est déposée et enroulée sur le tambour d'enroulement tournant (8),
- pivotement du bloc pivotant (7) autour de son axe (13) dans la deuxième position, de telle manière que le premier tambour d'enroulement (8) soit associé à la poseuse de fil (12) et que le deuxième tambour d'enroulement (9) soit associé à l'installation d'enroulement (10),
- bobinage de la couche de noyau (5) en un faisceau (14) d'éléments de résistance pré-caoutchoutés sur la couche de caoutchouc sous noyau (4) du premier tambour d'enroulement (8) et de préférence dépôt simultané d'une couche de caoutchouc sous noyau (4) sur le deuxième tambour d'enroulement tournant (9), du fait que la couche (4) est fournie à partir de l'installation d'enroulement (10) et est déposée et enroulée sur le deuxième tambour d'enroulement tournant (9),
- pivotement du bloc pivotant (7) autour de son axe (13) dans la première position, de telle manière que le premier tambour d'enroulement (8) soit associé à l'installation d'enroulement (10) et que le deuxième tambour d'enroulement (9) soit associé à la poseuse de fil (12),
- dépôt de la couche de recouvrement (6) sur le premier tambour d'enroulement (8), du fait que la couche (6) est fournie à partir de l'installation d'enroulement (10) et est déposée et enroulée sur le premier tambour d'enroulement (8), enlèvement de la couche de base (3) du premier tambour d'enroulement (8) et bobinage simultané d'un faisceau (14) d'éléments de résistance pré-caoutchoutés sur la couche de caoutchouc sous noyau (4) du deuxième tambour d'enroulement tournant (9),
- de préférence pivotement du bloc pivotant (7) autour de son axe (13), de telle manière que dans la deuxième position le premier tambour d'enroulement (8) soit associé à la poseuse de fil (12) et que le deuxième tambour d'enroulement (9) soit associé à l'installation d'enroulement (10),
- dépôt de la couche de recouvrement (6) sur la couche de noyau (5) du deuxième tambour d'enroulement (9), du fait que la couche (6) est fournie à partir de l'installation d'enroulement (10) et est déposée et enroulée sur la couche de noyau (5) du deuxième tambour d'enroulement tournant (9) et enlèvement de la couche de base (3) du deuxième tambour d'enroulement (9).

6. Procédé selon la revendication 5, **caractérisé en ce que** l'on déplace la poseuse de fil (12) en direction axiale et/ou en direction radiale par rapport aux tambours d'enroulement (8, 9).

7. Procédé selon la revendication 5 ou 6, **caractérisé en ce que** l'on pose un faisceau (14) de trois, quatre, cinq ou six éléments de résistance pré-caoutchoutés, de préférence des éléments de résistance en acier.
